# EUROPEAN PATENT APPLICATION

(11) **EP 4 663 947 A1**
(43) Date of publication of application: **17.12.2025**
(21) Application number: 24182181.8
(22) Date of filing: 14.06.2024
(51) Int. Cl.: F04B 7/00, F04B 13/00, F04B 51/00, G01M 3/26

(54) **A METHOD FOR DETERMINING A LEAK RATE IN A DISPLACEMENT PUMP**

(71) Applicant: TECAN Trading AG, 8708 Männedorf (CH)
(72) Inventor: AUTREY, Robert Claude, Lenexa, 66215 (US); MORGAN, Benjamin Wayne Jr, Boulder Creek, 95006 (US)
(74) Representative: Troesch Scheidegger Werner AG

(57) **Abstract**

A method for detecting a leak rate of a displacement pump (2,15) integrated in a laboratory automation apparatus (1) comprising a valve (4,10), the displacement pump and a pressure sensor (3); a) closing the valve (4,10); b) pressurizing the system (21) with a liquid to an initial pressure P1 using the displacement pump (2,15); c) monitoring the pressure by the pressure sensor (3) during time period Δt starting from initial pressure P1 at time t1; d) detecting a second pressure P2 at t2 at the end of the time period Δt, wherein pressure P2 is below pressure P1 when leakage occurs; e) repressurizing the system to pressure P1 by displacing an additional volume ΔV of the liquid using the displacement pump (2,15), and f) calculating the leak rate by dividing the additional volume ΔV by the predetermined time period Δt.

## Description

### FIELD OF THE INVENTION

The current invention relates to a method for detecting a leak rate of a displacement pump integrated in a laboratory automation apparatus. The invention further relates to a computer program for executing the method and a computer readable medium for storing the computer program.

### BACKGROUND OF THE INVENTION

Laboratory automation apparatuses including analytical testing devices or diagnostic testing devices require liquid handling for preparing, or supplying the liquids used in the apparatuses. The liquid handling devices include valves, tubes pumps or pump units. The analytical or diagnostic testing devices may include, for example, High Performance Liquid Chromatography (HPLC), Gas Chromatography (GC), Mass Spectrometry (MS) devices or a combination thereof. An example for a laboratory automation apparatus may be a dilutor, a pipetting device or a sample preparation device such as a Solid Phase Extraction apparatus (SPE). Another example of a laboratory automation apparatus may be synthesizer used for facilitating the synthesis of chemical molecules such as small molecules, peptides and/or large molecules such as DNA or RNA strands.

Components of liquid handling devices such as valves and pumps may be subjected to wear over time resulting in leakage, bad liquid handling and may influence the outcome of the analytical or diagnostic testing devices or the quality of the sample preparation.

US20200363379 discloses a rotary valve with a rotor member that is rotatable to predefined rotational positions for selecting between an inlet connectable to a syringe pump and a plurality of outlets.

US11054054B2 discloses a rotary valve for an analytical instrument including a stator plate and a rotatable rotor shaft. The stator plate may include a pressure sensor.

US20140138399A1 discloses an adhesive dispensing system with a piston pump including a leak rate test in a diagnostic process by closing a downstream valve, pressurizing the system to a predefined pressure value and monitor the pressure drop as a function of time.

EP3606671A1 discloses pressure testing of components that are interconnected to form a fluidic system having a plurality of flow paths. The pressure testing of the fluidic system includes selecting a flow path through a flow cell and actuating a syringe pump to pressurize a fluid in the flow path to a target pressure. The leak rate is determined based on the change in pressure over time. Alternatively, the leak testing is performed by aspirating the system with air.

### DESCRIPTION OF THE INVENTION

The pump or a pump unit may have to be removed from the laboratory automation apparatus for measuring a leak rate due to wear. An automated and integrated leak rate measurement may be preferred. Furthermore, it may be preferred to detect the leak rate for a liquid handling device with a liquid medium compared to gas leakage. It may be preferred to focus on the leak rate of the pump and distinguish between a pump leak rate and a system leak rate for the liquid handling device which is integrated into the laboratory automation apparatus and does not have to be removed from it. Further, it may be preferred that the leak rate detection can be executed with the existing hardware and firmware components.

It is an objective of the present invention to overcome the disadvantages of the prior art and provide a robust and simple method and computer program for detecting the liquid leak rate of a displacement pump without removing the displacement pump from the laboratory automation apparatus.

Those objectives are solved by the independent claims, further exemplary embodiments are evident from the dependent claims and the following description including the Figures.

A first aspect relates to a method for detecting a leak rate of a displacement pump integrated in a laboratory automation apparatus. The laboratory automation apparatus includes a system with a valve, the displacement pump and a pressure sensor which are fluidly connected to each other. The method includes the following subsequent steps:
a) closing the valve, thereby closing the system of the displacement pump, the pressure sensor and the valve,
b) pressurizing a liquid in the system to an initial pressure P1 using the displacement pump,
c) monitoring the pressure in the system by the pressure sensor during a predetermined time period Δt starting from first pressure P1 at time t1,
d) detecting a second pressure P2 at t2 at the end of the predetermined time period Δt, wherein pressure P2 is below pressure P1 when leakage occurs in the displacement pump,
e) repressurizing the system to pressure P1 by displacing an additional volume ΔV of the liquid using the displacement pump,
f) calculating the leak rate R by dividing the additional volume ΔV by the predetermined time period Δt; R= ΔV/Δt.

The at least one valve may be, for example a rotary valve, a ball valve, a solenoid valve or a needle valve. The displacement pump may be a screw pump, a rotary pump, a peristaltic pump, a syringe pump, a flexible tube pump, a reciprocating pump or a plunger pump. The pressure sensor may be a membrane sensor a piezoresistive sensor, a capacitive sensor, or a piezoelectric sensor. The predetermined time Δt may vary between minutes and hours. The predetermined time may depend on the size of the displacement pump. A given leakage rate may be small for a relatively large displacement pump, but the same leakage rate may be (unacceptably) high for a small pump. The initial pressure P1 is detected at the start of the predetermined period Δt and the pressure P2 is detected at the end of the period. The pressure P2 may be equal to pressure P1 when there is no leakage. If there is leakage within the displacement pump or at least the system including the displacement pump, the valve and the pressure sensor, then the second pressure P2 will be below the first pressure P1 at the start of the predetermined time period Δt. The detected leakage represents essentially the leakage of the displacement pump. The displacement pump needs to displace an additional volume ΔV to compensate for the losses due to pump leakage and the leak date is calculated as the ratio between the additional volume ΔV and the predetermined time period Δt.

The displacement pump remains integrated in the laboratory automation apparatus such that there is an in-situ determination of the leak rate without removing the displacement pump. The leak rate can be detected as part of a routine control procedure and thus ensures that the displacement pump provides a correct liquid supply.

The laboratory automation apparatus may include a diagnostic or analytical testing device, a synthesizer, a DNA sequencer or a wet chemical testing device. Those apparatuses require liquid handling devices for supplying the liquids used. The liquid handling devices may include the valve, the sensor and the displacement pump. The analytical or diagnostic testing device may, for example be a wet chemical testing device or High Performance Liquid Chromatography devices (HPLC), a Gas Chromatography device (GC), a Mass Spectrometry device (MS) or a combination thereof. An example of a sample preparation device may be a Solid Phase Extraction apparatus (SPE). The analytical testing device may be a liquid sampling device for sampling liquids from, for example, a bioreactor. The leak rate detection method provides a versatile method applicable to a wide variety of laboratory apparatuses. The laboratory automation apparatus may further include a robotic arm for moving laboratory equipment on a working table of the laboratory automation apparatus. The laboratory automation apparatus may further include a robotic pipetting arm for aspirating and dispensing liquids in they equipment.

In an embodiment, the displacement pump is a syringe pump including a hollow barrel and a plunger that is reciprocally moveable within the barrel and closing one opening of the barrel. The plunger is linearly moved or advanced within the barrel to a first position Z1 in the syringe for pressurizing the system to pressure P1 during step b), and the plunger is moved to a second position Z2 in the syringe during step e) for repressurizing the system to the same pressure level P1 after the predetermined time period Δt. The plunger may be moved by a plunger rod. The plunger rod advancement may be driven by an electromechanical drive. The plunger rod may be rotated in a static nut for an advancing and rotating the plunger rod. Alternatively, the plunger rod includes threaded sections, and a rotating nut advances the plunger rod which itself is prevented from rotation during advancement.

The barrel may be constructed of glass, a polymer or a ceramic. The polymer may be selected from polypropylene, polyethylene and the ceramic material may be selected from aluminum oxide. The plunger may be constructed of an elastomeric material or, for the ceramic barrel, may be made of a ceramic as well. The barrel includes a cylindrical section connecting an opening for receiving the plunger to an outlet. The outlet may be directly connected to the valve.

The additional or leaked volume ΔV for a syringe pump may be calculated as the difference ΔZ between the second position Z2 and the first position Z1 in the syringe multiplied by the surface area A of the plunger closing the barrel or by the cross-sectional area of the barrel. For a barrel having a circular inner shape with radius r this may be calculated as: ΔV = πr²ΔZ.
In an embodiment, the displacement pump is filled with a liquid for detecting or quantifying the liquid leak rate. The leak rate may be detected with the actual liquid to be pumped thereby representing the identical rheological properties of the liquid that will be pumped through the displacement pump as the leak rate may depend on, for example, the viscosity. Alternatively, the displacement pump is filled with air or an inert gas such as nitrogen during leak rate detection.

The pressure sensor may be located between the displacement pump and the at least one valve. The detected leak rate may be a combination of the leakage in the valve, the tubing or fluid connectors and the displacement pump. The total leakage may represent a system leakage and the contribution of the valve and sensor on the pump leakage is reduced when the valve is leak free, a limited number of fluid connectors are used and when the pressure sensor is close to the outlet of the displacement pump, for example close to the outlet of the syringe pump.

In an embodiment, the pressure sensor is incorporated in the at least one valve. The at least one valve may be directly coupled to the outlet of the displacement pump such that the leakage rate represents the pump leakage rate as the system losses are minimized.

The at least one valve may be a rotary valve selecting between an inlet which is connected or connectable to the displacement pump and at least one outlet of the valve. The inlet of the valve may be directly connectable to the outlet of the displacement pump, for example to the outlet of the syringe. There may be a plurality of valve outlets such that the inlet of the valve may be selectively connectable to one of the plurality of valve outlets. A rotor of the rotary valve may be rotated to predefined angular positions for selecting or switching between the valve outlets. Each of the valve outlets may be connected to a tubing for guiding the liquid to other parts, components or testing devices of the analytical testing device.

Steps a) to f) of the method mentioned above may be repeated in an embodiment for determining a plurality of leak rate values and the plurality of leak rate values are used for calculating an average leak rate.

The displacement pump is integrated in the analytical testing device and preferably not removed from the testing device when executing steps a) to f). The leak rate may be periodically checked when the displacement pump remains integrated, and the leak rate detection may be part of a routine control procedure.

Another aspect of the invention relates to a computer program for detecting a leak rate of a displacement pump integrated in an analytical testing device. The computer program may be executed by a processor that is part of the laboratory automation apparatus, the analytical/diagnostic testing device and is adapted to execute the method steps a) to f). The processor may be part of a separate device remote from the analytical testing device.

The displacement pump may be a syringe pump and the computer program may be configured to further execute step g):
g) comparing the calculated leak rate with a maximum leak rate stored in a storage device and automatically providing a signal to the user of the analytical testing device for replacing the syringe pump when the calculated leak rate exceeds the maximum leak rate.
The storage device may be part of the analytical testing device or may be part of a remote computing device. Step g) may be periodically executed and only signals to the user that the syringe pump needs to be exchanged when the leak rate exceeds the stored maximum leak rate. The signal may be an acoustic or visual signal or an automatic message may be displayed on the user interface of the analytical testing device or a message may be sent to a remote device. The message sent to the remote device may automatically trigger an order for a replacement pump.

The maximum leak rate stored in the storage device may depend on the size of the syringe as a given leak rate may be acceptable for large syringe but may not be acceptable for a small syringe. For example a leak rate of 1 microliter/s may be acceptable for a 50 milliliter syringe but may not by acceptable for a 1 milliliter syringe.

Another aspect relates to a computer readable medium in which the computer program is stored. The computer readable medium may be a disc, USB stick or a hard drive.

### BRIEF DESCRIPTION OF THE DRAWINGS

Embodiments of the present invention are described in more detail with reference to the attached drawings presenting:
- Figure 1:: Schematic representation of a laboratory automation apparatus with a displacement pump, a valve, and a pressure sensor,
- Figure 2:: Pressure versus time diagram for the leak rate detection method,
- Figure 3a:: Schematic drawing of a syringe pump with a valve and pressure sensor connected to the outlet of the syringe,
- Figure 3b:: Syringe pump of Figure 3a with closed valve,
- Figure 3c:: Syringe pump of Figure 3a pressurized to P1 by moving the piston to position Z1,
- Figure 3d:: Syringe pump of Figure 3a repressurized to P1 by moving the piston to position Z2 after the predetermined time period Δt,
- Figure 4:: Longitudinal section of a rotary valve,
- Figure 5:: Cross sectional view of the rotary valve of Figure 4, valve in open position,
- Figure 6:: Cross sectional view of the rotary valve of Figure 4, valve in closed position
- Figure 7:: Block diagram presenting the method for detecting the leak rate in a displacement pump.

### DETAILED DESCRIPTION OF EXEMPLARY EMBODIMENTS

Definition: The distal end or distal direction is defined by the flow direction for the liquid, thus the distal tip of a pipette is defined by the outlet of the pipette tip and the proximal end is opposite to the distal end. The indefinite article "a" or "an" does not exclude a plurality. For example, "a valve" does not exclude the fact that there may be two valves that functionally or structurally fulfill the purpose of "a valve". In the claims, the word "comprising" does not exclude other elements or steps.

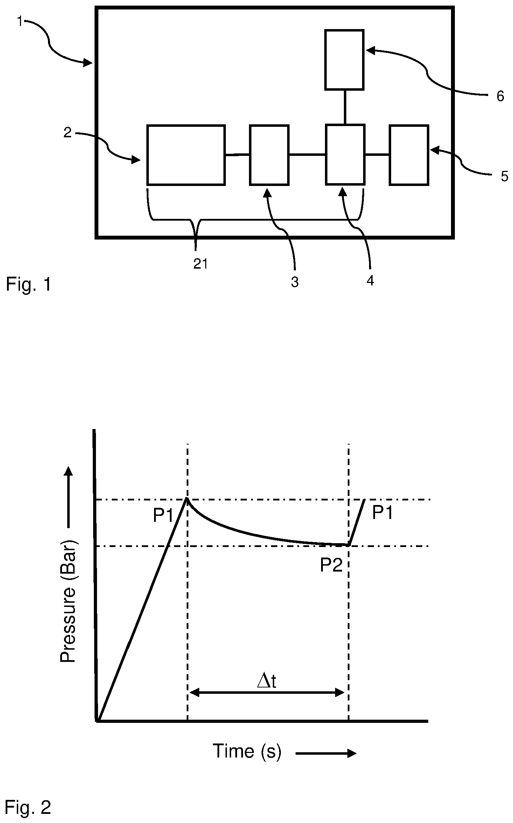

Figure 1 shows a schematic representation laboratory automation apparatus 1 with a displacement pump 2, a pressure sensor 3 and a valve 4. The displacement pump 2, the pressure sensor 3 and valve provide a system or assembly 21 that may be closed by the valve 4. The components of the system are fluidly connected to each other. The displacement pump 2 may be prefilled or may be fluidly connected to a container providing the liquid supply. The pressure sensor 3 is located between the valve 4 and an outlet of the displacement pump 2. The valve 4 may be a multi-port valve for selecting between, for example, a waste container 6 or fluidly connecting the displacement pump to a testing device such as a HPLC device 5. Alternatively, the testing device is a GC or GC-MS device. Instead of a testing device 6 also a solid phase extraction device may be used, or a synthesizer or liquid may be supplied by the system 21 to a bioreactor. The laboratory automation apparatus 1 may include a robotic arm for placing and moving parts on a worktable of the apparatus. The laboratory automation apparatus 1 may include a pipetting unit for aspirating and dispensing fluids and the pipetting unit may be moved by the robotic arm. A schematic representation of the pressure versus time diagram during the leak test is presented in Figure 2. The valve 4 is closed and the displacement pump 2 pressurizes a liquid in the system 21 to pressure P1 which is detected by pressure sensor 3. The displacement pump 2 stops pumping or is put on halt for a predetermined time period Δt. The pressure may remain at level P1 if there is no pump leakage but, as presented in Figure 2, the pressure may drop to P2 due to liquid leakage in the pump. After the time period, the displacement pump repressurizes the liquid to P1 by displacing a volume ΔV and the leak rate is calculated as the ratio between ΔV/Δt.

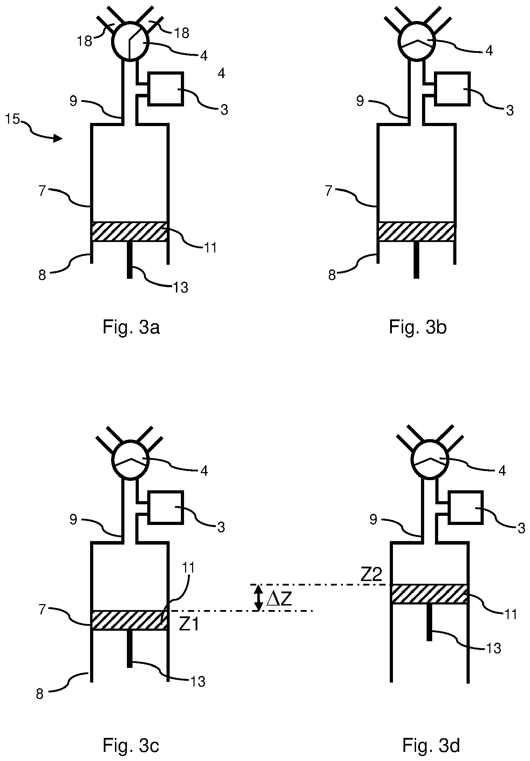

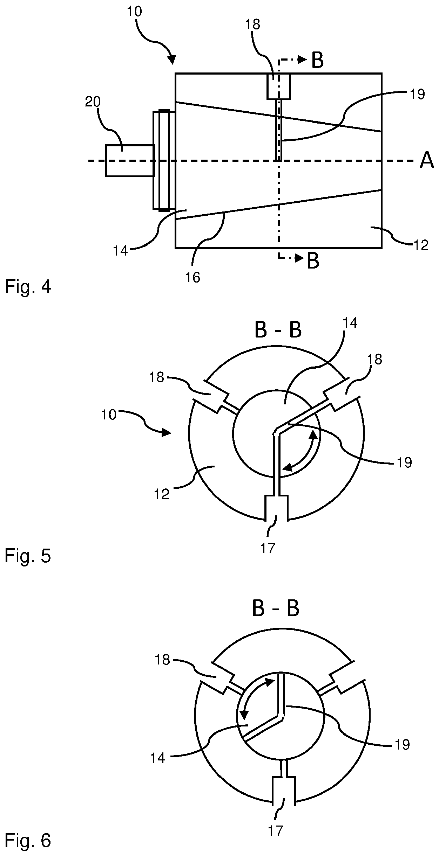

Figure 3a presents a schematic drawing for a syringe pump 15 with a valve 4 and pressure sensor 3. The valve 4 and pressure sensor 3 are connected to an outlet 9 of a syringe 7 and the pressure sensor 3 is located between the outlet 9 and the valve 4. A three-way rotary valve 4 is presented in Figure 3a with an inlet connected to the syringe 7 and a rotor that may select between one of the two outlets 18. Further details for the rotary valve are presented below in Figures 4 to 6. The syringe 7 includes a barrel 8 with an opening for receiving a plunger 11. The barrel 8 has a cylindrical shape and the center of the barrel defines a Z-axis. The plunger 11 can be moved along the Z-axis towards the outlet 9 of the syringe by a plunger rod 13. The plunger rod is driven by an electromechanical drive. The valve 4 is closed is closed for detecting the leak rate as shown in Figure 3b and the plunger 11 is advanced to position Z1 thereby compressing the liquid present in the syringe 7 (Figure 3c). The pressure P is measured using the pressure sensor 3. After a predetermined time period Δt (Figure 2), the plunger is advanced to position Z2 for repressurizing the liquid to the pressure P1 after the pressure has dropped to P2. The difference ΔZ is used for calculating the volume ΔV for calculating the leak rate. The difference ΔZ can be derived from the drive mechanism, for example from the number of steps of a step-motor that can be converted into linear movement. Alternatively, a separate Z-axis sensor is used for measuring the difference between Z2 and Z1. The dimensions and surface area A of the plunger 11 are known or the inner dimensions of the barrel 8 of the syringe may be used for calculating the surface area A. The leak volume ΔV is calculated as ΔZxA and the leak rate as the ratio between ΔV/Δt.

An example for a rotary valve 10 is presented in Figures 4, 5 and 6. The rotary valve 10 includes a conical shaped rotor member 14 that fits into a conical shaped passage 16 of a stator member 12. The rotor member 14 can rotate around axis A to different rotational positions for selectively coupling an inlet 17 in the stator 12 via a channel in the rotor 14 to one of a plurality of outlets 18 of the stator. The inlet 17 may be coupled to the outlet of the syringe. The rotor member 14 includes an axle 20 that is coupled to, or may be coupled to a drive mechanism for rotating the rotor member 14 with respect to the stator member 12 to predefined angular positions. A cross sectional view B-B of the rotary valve 10 of Figure 4 is presented in Figure 5. The rotor 14 includes a channel 19 selectively coupling the inlet 17 via the rotor channel 19 to an outlet 18 (Figure 5). The valve is closed when the rotor member 14 is rotated to a rotary position where the channel 19 is unable to couple the inlet 17 to one of the outlets 18. The rotor14 and/or the stator member may be constructed from a polymeric material. Alternatively, the rotor and/or stator member may be constructed from a ceramic material.

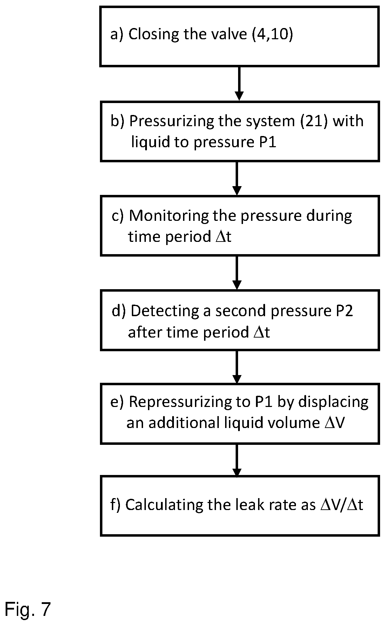

Each of the method steps a) to f) for determining the leak rate of a displacement pump is depicted in the block diagram presented in Figure 7. The method for detecting the leak rate is exemplary explained using the syringe pump set-up as disclosed in Figures 3a to 3d. The syringe pump 15 is filled with a liquid and the valve 4 is closed (Figure 3b). The plunger 11 is advanced along the Z-axis to position Z1 for detecting initial pressure P1. After the predetermined time period Δt, the system 21 of the syringe pump 15, the valve 4 and pressure sensor 3 is pressurized again to pressure P1 by moving the plunger to position Z2. The additional volume ΔV representing the leaked volume, is calculated and divided by the predetermined time period Δt for calculating the leak rate. The leak rate may be displayed to the user on a user interface. The calculated leak rate may be stored in a storage device. An average leak rate may be calculated from repeating the leak rate method. Each of the method steps a) to f) is depicted in the block diagram presented in Figure 7.

A computer program for executing the method for detecting the leak rate is configured to execute the method steps. The computer program may store the calculated leak rates or average leak rates in a storage device and may compare the measured values with maximum leak rates stored in the storage device. The computer program may activate a signal or display an alarm on a display when the detected leak rate exceeds a maximum leak rate. The maximum leak rate may depend on the size of the syringe; for example a leak rate of 2 microliter/sec may be acceptable for a 5000ul syringe with a 3 second dispense cycle. The same leak rate may not be acceptable for a SOul syringe with a 30 second dispense cycle.

### LIST OF REFERENCE SIGNS

- 1: Laboratory automation apparatus
- 2: Displacement pump
- 3: Pressure sensor
- 4: Valve
- 5: HPLC
- 6: Waste container
- 7: Syringe
- 8: Barrel
- 9: Outlet
- 10: Rotary valve
- 11: Plunger
- 12: Stator member
- 13: Plunger rod
- 14: Rotor member
- 15: Syringe pump
- 16: Conical passage
- 17: Inlet
- 18: Outlet
- 19: Channel
- 20: Axle
- 21: System, assembly
- A: Rotor axis

## Claims

1. A method for detecting a leak rate of a displacement pump (2,15) integrated in a laboratory automation apparatus (1) comprising a system (21) with a valve (4,10), the displacement pump and a pressure sensor (3); the method comprising the following steps:
a) closing the valve (4,10),
b) pressurizing the system (21) with a liquid to an initial pressure P1 using the displacement pump (2,15),
c) monitoring the pressure by the pressure sensor (3) during a predetermined time period Δt starting from initial pressure P1 at time t1,
d) detecting a second pressure P2 at t2 at the end of the predetermined time period Δt, wherein pressure P2 is below pressure P1 when leakage occurs,
e) repressurizing the system to pressure P1 by displacing an additional volume ΔV of the liquid using the displacement pump (2,15),
f) calculating the leak rate by dividing the additional volume ΔV by the predetermined time period Δt.

2. The method according to claim 1, wherein the laboratory automation apparatus (1) comprises an analytical testing device, a diagnostic testing device, a synthesizer, a DNA-sequencer or a wet chemical testing device.

3. The method according to claims 1 or 2, wherein the displacement pump (2) is a syringe pump (15) and wherein a plunger (11) is moved to a first position Z1 in a syringe (7) for pressurizing the system (21) to initial pressure P1 in step b), and wherein the plunger (11) is moved to a second position Z2 in the syringe (7) in step e) for repressurizing the system to pressure P1 after the predetermined time period Δt.

4. The method according to claim 3, wherein the additional volume ΔV is calculated as the difference ΔZ between second position Z2 and first position Z1 multiplied by the surface area of the plunger (11).

5. The method according to any of the previous claims wherein the displacement pump is filled with a liquid for detecting the leak rate.

6. The method according to any of the previous claims wherein the pressure sensor (3) is located between the displacement pump (2) and the valve (4,10).

7. The method according to any of the previous claims wherein the pressure sensor (3) is incorporated in the valve (4,10).

8. The method according to any of the previous claims wherein the valve is a rotary valve (10) selecting between an inlet (17) connectable to the displacement pump and at least one outlet (18).

9. The method according to any of the previous claims wherein steps a) to f) are repeated for calculating an average leak rate.

10. The method according to any of the previous claims wherein the displacement pump (2,15) is not removed from the analytical testing device (1) when executing steps a) to f).

11. A computer program for detecting a leak rate of a displacement pump (2, 15) integrated in the analytical testing device (1), the computer program when executed by a processor that is part of the analytical testing device is adapted to execute the method of claims 1 to 10.

12. The computer program according to claim 11, wherein the displacement pump (2) is a syringe pump (15) and wherein the computer program is configured to execute step g):
g) comparing the calculated leak rate with a maximum leak rate stored in a storage device and automatically providing a signal to the user of the analytical testing device for replacing the syringe pump (15) when the calculated leak rate exceeds the maximum leak rate.

13. The computer program according to claim 12, wherein the maximum leak rate stored in the storage device depends on the size of the syringe.

14. A computer readable medium in which the computer program according to claims 11 to 13 is stored.
